# EUROPÄISCHE PATENTSCHRIFT

(11) **EP 2 334 941 B1**
(45) Veröffentlichungstag und Bekanntmachung des Hinweises auf die Patenterteilung: **14.11.2012**
(21) Anmeldenummer: 09778361.7
(22) Anmeldetag: 07.09.2009
(51) Int. Cl.: F16D 1/08, F16H 55/18

(54) **GETEILTES ZAHNRAD**
DIVIDED TOOTHED WHEEL
ROUE DENTÉE À PLUSIEURS PARTIES

(30) Priorität: 04.10.2008 DE 102008050471
(43) Veröffentlichungstag der Anmeldung: 22.06.2011
(73) Patentinhaber: Thyssenkrupp Presta Teccenter Ag, 9492 Eschen (LI)
(72) Erfinder: MEIER, Alex, FL-9495 Triesen (LI)
(74) Vertreter: Adams, Steffen
(86) Internationale Anmeldenummer: PCT/EP2009/006465
(87) Internationale Veröffentlichungsnummer: WO 2010/037461

(56) Entgegenhaltungen:
- EP-A- 0 606 864
- JP-A- 9 152 015
- JP-A- 2000 257 698

## Beschreibung

Die Erfindung betrifft ein geteiltes Zahnrad mit zwei gegeneinander verspannten Zahnradhälften, wobei die erste Zahnradhälfte einen hohlzylindrischen Bund aufweist, auf dem die zweite Zahnradhälfte mittels eines Befestigungselementes befestigt ist.

Es ist bekannt bei über einen Zahnradtrieb angetriebenen Wellen, wie z.B. Nockenwellen oder Ausgleichswellen, die sich im Betrieb mit halber bzw. doppelter Motorendrehzahl drehen, als Antriebselement anstelle von einfachen, einstückigen Zahnrädern ein jeweils geteiltes Zahnrad mit gegeneinander verspannten Zahnradhälften einzusetzen. Durch die spielfreie Verspannung der Zahnräder wird eine unerwünschte Geräuschentwicklung vermieden, die erfahrungsgemäß bei Verwendung von einstückigen Zahnrädern aufgrund von Spiel auftreten könnte.

Die EP 0 205 156 B1 offenbart ein geteiltes Zahnrad, das aus einem ersten Zahnradteil und einem zweiten Zahnradteil besteht, wobei die Zahnradteile über eine Omega-förmige Feder gegeneinander verspannt sind. Das erste Zahnradteil weist einen hohlzylindrischen zapfenförmigen Bund auf, mit dem es auf eine Welle aufgeschoben werden kann und der im montierten Zustand die Welle umschließt. Das zweite Zahnradteil wird bei der Montage auf den Außenumfang des Bundes aufgeschoben. Der Bund weist an seinem Außenumfang eine Nut auf, in die ein Sprengring (snap ring) eingesetzt wird, mit dem das zweite Zahnradteil auf dem Bund axial formschlüssig befestigt wird. Das zweite Zahnradteil stützt sich mit seiner von dem ersten Zahnradteil abgewandten Seitenfläche an dem Sprengring ab. In den Figuren der EP 0 205 156 B1 ist der Sprengring nicht dargestellt. Die Befestigung der zweiten Zahnradhälfte auf dem Bund wird lediglich im Beschreibungsteil beschrieben und nicht in der Zeichnung dargestellt.

Wird der Sprengring wieder aus der Nut entfernt, so lässt sich das zweite Zahnradteil wieder von dem Bund abziehen. Die beiden Zahnradteile sind daher nicht unlösbar miteinander verbunden, sondern die zweite Zahnradhälfte wird lediglich mit einer lösbaren formschlüssigen Verbindung auf dem Bund gehalten.

Nachteilig bei dieser bekannten Verbindung zwischen den beiden Zahnradhälften ist außerdem, dass in Axialrichtung der Welle gesehen ein großer Bauraum benötigt wird. Denn der Bund der ersten Zahnradhälfte muss in Axialrichtung gesehen deutlich über die von der ersten Zahnradhälfte abgewandten Seitenfläche der zweiten Zahnradhälfte hinaus ragen, damit die Nut in den Bund eingebracht werden kann und gleichzeitig auch noch am freien Ende des Bundes genügend "Fleisch" vorhanden ist, damit der Bund die geforderte Festigkeit aufweist. Insbesondere bei Nockenwellen oder Ausgleichswellen in Verbrennungsmotoren steht den Konstrukteuren jedoch häufig nur ein sehr geringer Bauraum zur Verfügung.

Nachteilig ist weiterhin, dass in den Bund der ersten Zahnradhälfte eine Nut eingebracht werden muss, damit sich der Sprengring an dem Bund abstützen kann und somit Axialkräfte aufgenommen werden können. Durch die Nut wird die Festigkeit des Bundes geschwächt (Kerbwirkung) und es ist erforderlich, das vorstehend bereits als "Fleisch" bezeichnete zusätzliche Material am freien Ende des Bundes vorzusehen, um eine ausreichende Festigkeit zu gewährleisten.

Ein geteiltes Zahnrad mit den Merkmalen des Oberbegriffs des Patentanspruchs 1 ist darüber hinaus aus der JP 09-152015 A bekannt.

Der Erfindung liegt daher ausgehend von dem Eingangs erwähnten bekannten Zahnrad die Aufgabe zu Grunde ein geteiltes Zahnrad mit zwei gegeneinander verspannten Zahnradhälften zu schaffen, bei dem in Axialrichtung gesehen nur ein minimaler Bauraum beansprucht wird und die beiden Zahnradhälften unlösbar miteinander verbunden sind.

Der Erfindung liegt außerdem die Aufgabe zugrunde, ein einfaches Verfahren zum Zusammenbau eines geteilten Zahnrades mit zwei gegeneinander verspannten Zahnradhälften anzugeben, bei dem die beiden Zahnradhälften in Axialrichtung gesehen auf möglichst Platz sparende Weise unlösbar miteinander verbunden werden können.

Diese Aufgabe wird hinsichtlich des Zahnrades gelöst durch ein geteiltes Zahnrad mit den Merkmalen des Patentanspruchs 1. Vorteilhafte Weiterbildungen sind in den Unteransprüchen angegeben.

Hinsichtlich des Verfahrens wird die vorgenannte Aufgabe gelöst durch ein Verfahren mit den Merkmalen des Anspruchs 9.

Das erfindungsgemäße geteilte Zahnrad weist die Merkmale des Anspruchs 1 auf. Bei der Montage wird die Kreisringscheibe derart gegen die auf dem Bund sitzende, mit der ersten Zahnradhälfte verspannte zweite Zahnradhälfte gepresst, dass die Federzungen einfedern. Anschließend wird die Kreisringscheibe entlastet, so dass diese wieder elastisch zurückfedert. Dabei dringen die Kanten der Federzungen in das Material des in der zentralen Öffnung angeordneten Bauteils ein, so dass sie sich formschlüssig auf dem Außendurchmesser des Bauteils abstützen.

Die beiden Zahnradhälften sind dadurch unlösbar miteinander verbunden, denn sie können nicht mehr voneinander gelöst werden, ohne die Kreisringscheibe und/oder den Bund zu zerstören.

Das in der zentralen Öffnung angeordnete Bauteil, auf dessen Außenumfang sich die Kanten der Federzungen im zusammengebauten Zustand des Zahnrads formschlüssig abstützen, kann z.B. ein Rohr oder eine Welle sein, auf dem oder auf der das Zahnrad befestigt ist. Ebenso ist es möglich, dass das in der zentralen Öffnung angeordnete Bauteil der Bund ist, den die erste Zahnradhälfte aufweist. Der Bund kann ein separates Bauteil sein, das mit der ersten Zahnradhälfte verbunden ist. Alternativ kann der Bund auch einstückig mit der ersten Zahnradhälfte ausgebildet sein.

Erfindungsgemäß sind die Kanten der Federzungen schneidenförmig ausgebildet. Dadurch wird erreicht, dass die Kanten beim Zurückfedern der Federzungen gut in die Oberfläche des Bauteils eindringen und somit eine gute formschlüssige Abstützung der Kreisringscheibe über die Federzungen an dem Bauteil erreicht wird.

Nach einer bevorzugten Ausführungsform der Erfindung bestehen die Federzungen der Kreisringscheibe aus einem härtbaren Metall und zumindest die Kanten sind gehärtet, so dass sie eine größere Härte als das Material des Bauteils im Abstützbereich der Kanten aufweisen.

Um die axiale Erstreckung des zusammengebauten geteilten Zahnrades weiter zu reduzieren, ist nach einer besonders bevorzugten Ausführungsform der Erfindung vorgesehen, dass die der Kreisringscheibe zugewandte Seitenfläche der zweiten Zahnradhälfte eine sich in radialer Richtung erstreckende Ausnehmung aufweist, deren Rand die Kreisringscheibe umschließt. Da diese Ausnehmung in axialer Richtung eine gewisse Tiefe aufweist, wird die Kreisringscheibe in diese Ausnehmung zumindest teilweise aufgenommen und die axiale Gesamterstreckung des zusammengebauten Zahnrades wird verringert. Vorzugsweise ist die Tiefe der Ausnehmung in axialer Richtung genau so groß oder sogar größer als die axiale Erstreckung der Kreisringscheibe selbst. Auf diese Weise ragt die Kreisringscheibe nicht über die axialen Außenabmessungen der zweiten Zahnradhälfte hinaus und es wird eine sehr kompakte Bauweise erreicht.

Ein weiterer Vorteil der erfindungsgemäßen Lösung besteht darin, dass in das in der zentralen Öffnung der Kreisringscheibe angeordnete Bauteil (also z.B. in das Rohr, in die Welle oder in den Bund der ersten Zahnradhälfte) keine Nut eingebracht werden muss. Das erfindungsgemäße Befestigungsmittel geht durch die in das Material des Bauteils eindringenden Kanten der Federzungen eine formschlüssige Verbindung mit dem Bauteil ein, ohne dass eine die Festigkeit des Bauteils schwächende Nut zur Abstützung des Befestigungselementes erforderlich ist. Daher ist es auch nicht erforderlich, das Bauteil mit einer axialen "Überlänge" auszubilden, um eine ausreichende Festigkeit des Bauteils zu erreichen. Auf diese Weise kann die effektive axiale Erstreckung des Bauteils reduziert und damit der in axialer Richtung benötigte Bauraum für das zusammengebaute geteilte Zahnrad minimiert werden.

Bei dem erfindungsgemäßen Verfahren zum Zusammenbau eines geteilten Zahnrades mit zwei gegeneinander verspannten Zahnradhälften, wird von einer ersten Zahnradhälfte ausgegangen, die einen hohlzylindrischen Bund aufweist. Eine zweite Zahnradhälfte wird auf den Bund aufgeschoben, wobei die zweite Zahnradhälfte auf dem Bund mittels eines Befestigungselementes befestigt wird.

Das erfindungsgemäße Verfahren umfasst die Verfahrensschritte des Anspruchs 9.

Bei dem Zusammenbau des geteilten Zahnrades wird zunächst die zweite Zahnradhälfte auf den Bund der ersten Zahnradhälfte aufgeschoben. Anschließend wird die Kreisringscheibe auf das in der zentralen Öffnung der Kreisringscheibe angeordnete Bauteil aufgeschoben und unter Einfedern der Federzungen gegen die zweite Zahnradhälfte gepresst. Danach wird die Kreisringscheibe entlastet, wobei die Federzungen zurückfedern und sich mit ihren Kanten formschlüssig auf dem Außenumfang des Bauteils abstützen.

Mit dem erfindungsgemäßen Verfahren lässt sich auf einfache Weise eine unlösbare Verbindung zwischen den beiden Zahnradhälften herstellen und es wird nur ein minimaler Bauraum in Axialrichtung benötigt. Somit lassen sich zusammengebaute zweiteilige Zahnräder herstellen, die eine deutlich geringere Axialerstreckung aufweisen als die eingangs diskutierten bekannten Zahnräder. Insbesondere bei einem Einsatz in Verbrennungsmotoren, z.B. an Nockenwellen oder Ausgleichswellen, kann auf diese Weise Bauraum eingespart bzw. vorhandener Bauraum optimal ausgenutzt werden.

Um die erfindungsgemäße Kreisringscheibe herzustellen wird von einem bandförmigen Halbzeug aus härtbarem Federstahl ausgegangen. Von dem Band wird zunächst ein Blech abgetrennt. Anschließend erfolgt ein Freistanzen einer Blechronde und danach ein Topfziehen der Blechronde. Im Anschluss daran werden die sternförmig angeordneten Schlitze eingestanzt und die späteren Federzungen werden durch Biegen des "Sterns" in Form gebracht. Danach wird die zentrale Öffnung durch Ausstanzen erzeugt und die Federzungen erhalten ihre schneidenförmigen Kanten. Die einzelnen Bearbeitungsstufen können zweckmäßig in einem Folgeverbundwerkzeug ausgeführt werden. Abschließend wird die Kreisringscheibe einer Wärmebehandlung unterzogen, bei der zumindest die Federzungen an ihren freien Enden im Bereich der Kanten gehärtet werden.

Im Folgenden wird die Erfindung anhand einer Zeichnung näher erläutert. Im Einzelnen zeigen
- Fig. 1: eine Explosionsdarstellung des erfindungsgemäßen geteilten Zahnrades,
- Fig. 2: das erfindungsgemäße geteilte Zahnrad im zusammengebauten Zustand auf einem Wellenende im radialen Halbschnitt, und
- Fig. 3: das auf ein Ende einer Nockenwelle montierte geteilte Zahnrad in einer perspektivischen Ansicht.

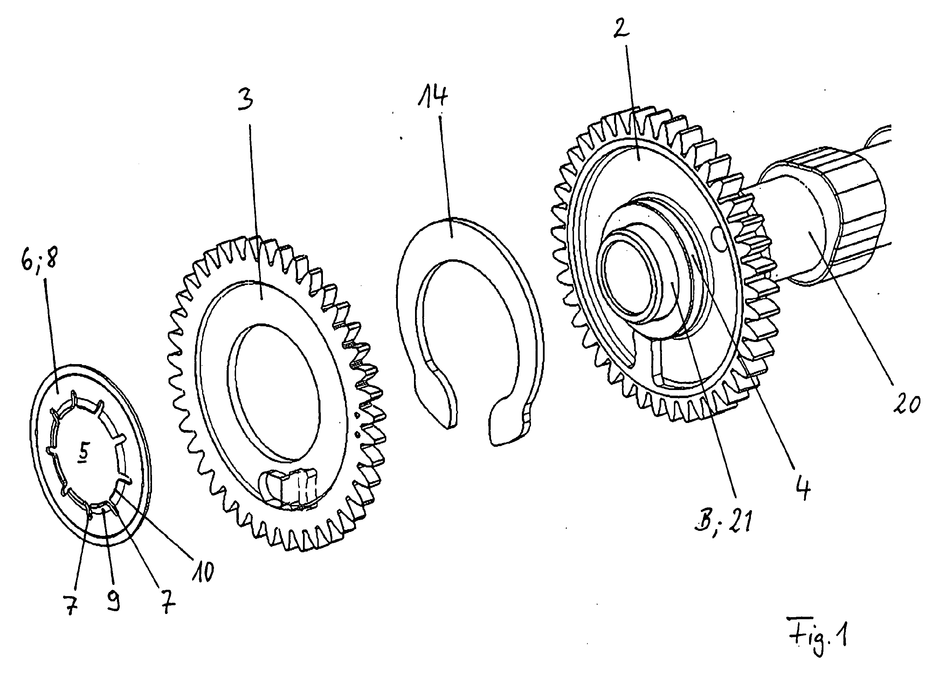

Die Explosionsdarstellung in Fig. 1 zeigt eine erste Zahnradhälfte 2, die auf dem Wellenende 21 einer Nockenwelle 20 befestigt ist. Die erste Zahnradhälfte 2 weist einen Bund 4 auf, der sich in axialer Richtung erstreckt. Zum Zusammenbau des Zahnrades wird die zweite Zahnradhälfte 3 in axialer Richtung auf den Bund 4 aufgeschoben. Zwischen den beiden Zahnradhälften ist ein Federelement 14 angeordnet, das sich einerseits an der ersten Zahnradhälfte 2 und andererseits an der zweiten Zahnradhälfte 3 abstützt, wenn es montiert ist. Durch dieses Federelement 14 werden die beiden Zahnradhälften im montierten Zustand in einer an sich bekannten Art und Weise gegeneinander verspannt.

Ist die zweite Zahnradhälfte 3 auf den Bund 4 aufgeschoben, so werden die beiden Zahnradhälften 2, 3 auf dem Wellenende 21 der Nockenwelle 20 befestigt. Natürlich könnte auch zuerst die erste Zahnradhälfte 2 auf dem Wellenende 21 befestigt und anschließend die zweite Zahnradhälfte 3 mit dem Federelement 14 montiert werden. Erfindungsgemäß wird dann die als Befestigungselement 6 dienende Kreisringscheibe 8 auf das Wellenende 21 der Nockenwelle 20 aufgeschoben. Die Kreisringscheibe 8 besitzt eine zentrale Öffnung 5, mit der sie auf das Ende der Nockenwelle 20 aufgeschoben werden kann. Von der zentralen Öffnung 5 ausgehend erstrecken sich radial nach außen Schlitze 7, die über den Umfang verteilt angeordnet sind. Zwischen diesen Schlitzen 7 sind laschenartige Federzungen 9 ausgebildet, die an ihren freien Enden Kanten 10 aufweisen.

Um das erfindungsgemäße geteilte Zahnrad zusammen zu bauen und die beiden Zahnradhälften 2, 3 dauerhaft und unlösbar miteinander zu verbinden, wird die Kreisringscheibe 8 derart gegen die zweite Zahnradhälfte 3 gepresst, dass die Federzungen 9 einfedern. Anschließend wird die Kreisringscheibe 8 entlastet, so dass die Federzungen 9 zurückfedern. Beim Zurückfedern dringen die Kanten 10 der Federzungen 9 in das Material des rohrförmigen Körpers des Wellenendes 21 der hohlzylindrischen Nockenwelle 20 ein, so dass sich an dem Außenumfang des Wellenendes 21 ein Widerlager ausbildet, gegen das sich die Kanten 10 der Federzungen 9 abstützen.

Es ist nun nicht mehr möglich, die beiden Zahnradhälften 2, 3 voneinander zu trennen, ohne die Kreisringscheibe 8 und/oder die Nockenwelle 20 dabei zu zerstören oder zu beschädigen. Daher handelt es sich um eine unlösbare Verbindung zwischen den beiden Zahnradhälften 2, 3, die durch die Kreisringscheibe 8 hergestellt wird.

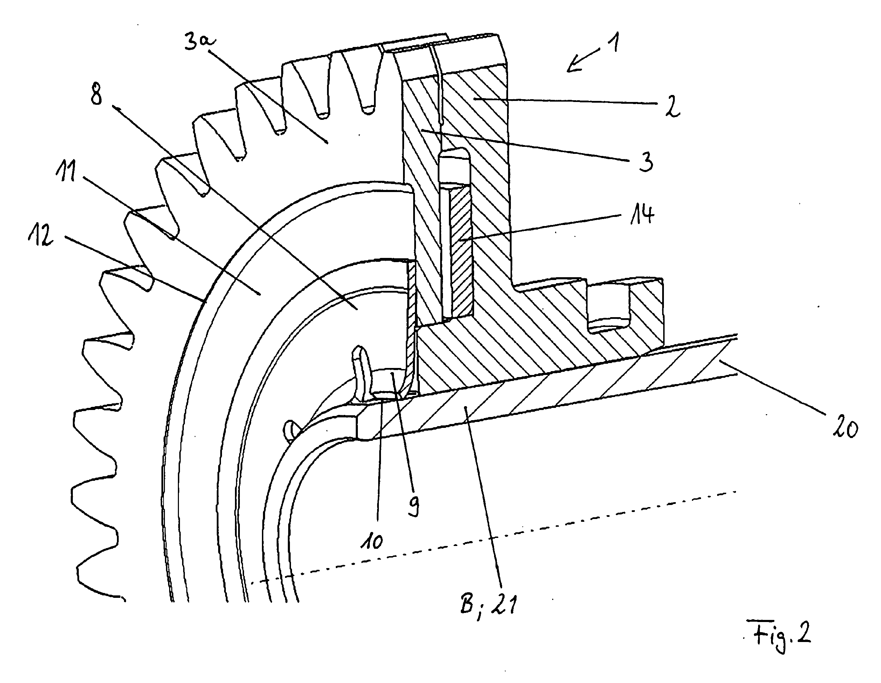

In Fig. 2 ist das erfindungsgemäße geteilte Zahnrad 1 im zusammengebauten Zustand auf dem Wellenende 21 der Nockenwelle 20 im radialen Halbschnitt dargestellt. Die Kreisringscheibe 8 stützt sich mit den schneidenförmigen Kanten 10 ihrer Federzungen 9 formschlüssig auf der Außenfläche des Wellenendes 21 der Nockenwelle 20 ab. Die der Kreisringscheibe 8 zugewandte Seitenfläche 3a der zweiten Zahnradhälfte 3 weist eine sich in radialer Richtung erstreckende Ausnehmung 11 auf, deren Rand 12 die Kreisringscheibe 8 umschließt. Die Tiefe der Ausnehmung 11 in axialer Richtung ist dabei so bemessen, dass sie genauso groß oder größer ist, als die axiale Erstreckung der Kreisringscheibe 8. Dadurch wird erreicht, dass die Kreisringscheibe 8 nicht in axialer Richtung über die Abmessungen der zweiten Zahnradhälfte 3 hinausragt. Die Ausnehmung 11 kann z.B. durch ein spanendes Bearbeitungsverfahren wie Drehen oder Fräsen in die zweite Zahnradhälfte eingebracht werden. Wird die zweite Zahnradhälfte z.B. durch Schmieden hergestellt, so kann die Ausnehmung auch schmiedetechnisch hergestellt werden.

Damit die schneidenförmig ausgebildeten Kanten 10 der Federzungen 9 sich gut beim Zurückfedern der Federzungen 9 in das Material der Nockenwelle 20 einarbeiten können, weisen die Kanten 10 eine größere Härte auf als das Material, aus dem der rohrförmige Körper der Nockenwelle 20 im Abstützbereich der Kanten 10 besteht. Die schneidenförmigen Kanten 10 können sich somit aufgrund ihrer Härte und ihrer Schärfe gut in die Oberfläche der Nockenwelle 20 einarbeiten, wenn die Kreisringscheibe 8 beim Zusammenbau des Zahnrades nach dem Anpressen an die zweite Zahnradhälfte 3 wieder entlastet wird und die Federzungen 9 zurückfedern.

Im dargestellten Ausführungsbeispiel besteht die Kreisringscheibe 8 aus einem härtbaren Metall. Die freien Enden der Federzungen 9 sind gehärtet, um die erforderliche Härte der schneidenförmigen Kanten 10 zu erreichen.

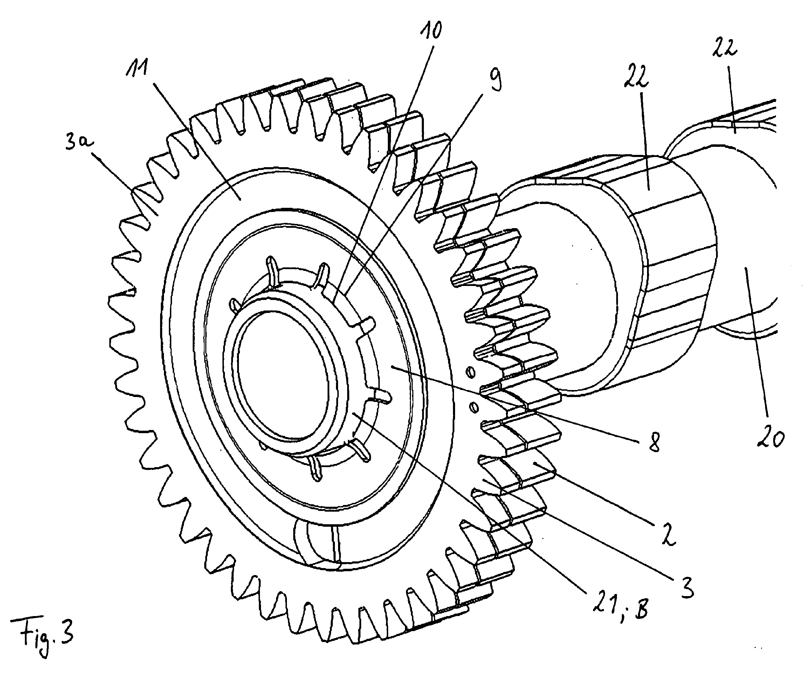

In der perspektivischen Ansicht gemäß Fig. 3 ist das erfindungsgemäße geteilte Zahnrad 1 im zusammengebauten Zustand auf dem Wellenende 21 einer Nocken 22 tragenden Nockenwelle 20 angeordnet. Die zweite Zahnradhälfte 3 sitzt auf dem in Fig. 3 nicht sichtbaren Bund der ersten Zahnradhälfte 2. Die Zahnradhälften 2, 3 sind gegeneinander durch ein zwischen ihnen angeordnetes, nicht sichtbares Federelement verspannt. Die Kreisringscheibe 8 stützt sich mit den Kanten 10 der Federzungen 9 auf dem Außenumfang des Wellenendes 21 formschlüssig ab. Die zweite Zahnradhälfte 3 ist auf diese Weise axial formschlüssig auf dem Bund der ersten Zahnradhälfte 2 fixiert. Die Kreisringscheibe 8 ist aufgenommen in der Ausnehmung 11 der zweiten Zahnradhälfte 3. Es ist gut zu erkennen, dass das Wellenende 21 nur um ein sehr geringes Maß in axialer Richtung über die Seitenfläche 3a der zweiten Zahnradhälfte 3 hinausragt, so dass eine axial sehr kompakte Bauweise erreicht wird. Wenn die Dicke der zweiten Zahnradhälfte 3 ausreichend groß ist, kann die Tiefe der Ausnehmung 11 so groß gestaltet werden, dass das Wellenende 21 bündig mit der Seitenfläche 3a der zweiten Zahnradhälfte 3 abschließt. Auf diese Weise beansprucht das Wellenende 21 keinen über die Abmessungen des geteilten Zahnrads hinausgehenden axialen Bauraum.

In den Fig. 1 bis 3 ist eine Ausführungsform der Erfindung dargestellt, bei der sich die Kanten 10 der Federzungen 9 auf dem Außenumfang eines rohrförmigen, hohlzylindrischen Wellenkörpers einer Nockenwelle 20 formschlüssig abstützen. Selbstverständlich kann die Erfindung in gleicher Weise auch bei massiven Wellenkörpern eingesetzt werden. Nach einer anderen, in den Fig. 1 bis 3 nicht dargestellten Ausführungsform der Erfindung können sich die Kanten 10 der Federzungen 9 auch auf dem Bund 4 der ersten Zahnradhälfte 2 formschlüssig abstützen. In diesem Fall weist der Bund 4 eine größere axiale Erstreckung auf, als dies für die Aufnahme der zweiten Zahnradhälfte 3 erforderlich ist. Der überstehende Abschnitt des Bundes 4 steht dann als Abstützfläche für die Kanten 10 der Federzungen zur Verfügung. Vorteilhaft ist hierbei, dass das geteilte Zahnrad bereits vollständig zusammengebaut werden kann, bevor es z.B. auf eine Nockenwelle 20 montiert wird.

### Bezugszeichenliste

- 1: Zahnrad
- 2: Zahnradhälfte
- 3: Zahnradhälfte
- 3a: Seitenfläche
- 4: Bund
- 5: Öffnung
- 6: Befestigungselement
- 7: Schlitz
- 8: Kreisringscheibe
- 9: Federzunge
- 10: Kante
- 11: Ausnehmung
- 12: Rand
- 14: Federelement
- 20: Nockenwelle
- 21: Wellenende
- 22: Nocke

- B: Bauteil
- R: Rohr
- W: Welle

## Patentansprüche

1. Geteiltes Zahnrad (1) mit zwei gegeneinander verspannten Zahnradhälften (2, 3), wobei die erste Zahnradhälfte (2) einen hohlzylindrischen Bund (4) aufweist, auf dem die zweite Zahnradhälfte (3) mittels eines Befestigungselementes (6) befestigt ist, wobei das Befestigungselement (6) als elastisch verformbare Kreisringscheibe (8) ausgebildet ist, **dadurch gekennzeichnet, dass** die Kreisringscheibe (8) Schlitze (7) aufweist, die von einer zentralen Öffnung (5) ausgehend radial nach außen verlaufen und über den Umfang verteilt angeordnet sind, so dass zwischen den Schlitzen (7) Federzungen (9) ausgebildet sind, und wobei die freien Enden der Federzungen (9) Kanten (10) aufweisen, die eine größere Härte aufweisen als der Werkstoff eines in der zentralen Öffnung (5) angeordneten Bauteils (B) im Abstützbereich der Kanten (10), so dass, nachdem die Kreisringscheibe (8) auf das Bauteil (B) aufgeschoben und unter Einfedern der Federzungen (9) gegen die zweite Zahnradhälfte (3) gepresst wurde, die Kanten (10) bei einem Zurückfedern der Federzungen (9) nach einem Anpressen der Kreisringscheibe (8) gegen die zweite Zahnradhälfte (3) in das Material des Bauteils (B) eindringen und sich formschlüssig abstützen.

2. Zahnrad nach Anspruch 1, **dadurch gekennzeichnet, dass** das Bauteil (B) ein Rohr (R) oder eine Welle (W) ist, auf dem oder auf der das Zahnrad befestigt ist.

3. Zahnrad nach Anspruch 1, **dadurch gekennzeichnet, dass** das Bauteil (B) der Bund (4) der ersten Zahnradhälfte (2) ist.

4. Zahnrad nach Anspruch 3, **dadurch gekennzeichnet, dass** der Bund (4) an der ersten Zahnradhälfte (2) befestigt oder einstückig mit der ersten Zahnradhälfte (2) ausgebildet ist.

5. Zahnrad nach einem der voranstehenden Ansprüche, **dadurch gekennzeichnet, dass** die Kanten (10) der Federzungen (9) schneidenförmig ausgebildet sind.

6. Zahnrad nach einem der voranstehenden Ansprüche, **dadurch gekennzeichnet, dass** zumindest die Federzungen (9) aus einem härtbaren Metall bestehen und zumindest die Kanten (10) gehärtet sind.

7. Zahnrad nach einem der voranstehenden Ansprüche, **dadurch gekennzeichnet, dass** die der Kreisringscheibe (8) zugewandte Seitenfläche (3a) der zweiten Zahnradhälfte (3) eine sich in radialer Richtung erstreckende Ausnehmung (11) aufweist, deren Rand (12) die Kreisringscheibe (8) umschließt.

8. Zahnrad nach Anspruch 7, **dadurch gekennzeichnet, dass** die Tiefe der Ausnehmung (11) in axialer Richtung genauso groß oder größer ist als die axiale Erstreckung der Kreisringscheibe (8).

9. Verfahren zum Zusammenbau eines geteilten Zahnrades (1) mit zwei gegeneinander verspannten Zahnradhälften (2, 3), wobei die erste Zahnradhälfte (2) einen hohlzylindrischen Bund (4) aufweist und die zweite Zahnradhälfte (3) auf den Bund (4) aufgeschoben wird, wobei die zweite Zahnradhälfte (3) auf dem Bund (4) mittels eines Befestigungselementes (6) befestigt wird, **gekennzeichnet durch** folgende Verfahresschritte:
a) als Befestigungselement (6) wird eine elastisch verformbare Kreisringscheibe (8) verwendet, welche Schlitze (7) aufweist, die von einer zentralen Öffnung (5) ausgehend radial nach außen verlaufen und über den Umfang verteilt angeordnet sind, so dass zwischen den Schlitzen (7) Federzungen (9) ausgebildet sind, wobei die freien Enden der Federzungen (9) Kanten (10) aufweisen, und wobei die Kanten (10) der Federzungen (9) eine größere Härte aufweisen als der Werkstoff eines in der zentralen Öffnung (5) angeordneten Bauteils (B) im Abstützbereich der Kanten (10);
b) zunächst wird die zweite Zahnradhälfte (3) auf den Bund (4) der ersten Zahnradhälfte (2) aufgeschoben;
c) anschließend wird die Kreisringscheibe (8) auf das Bauteil (B) aufgeschoben und unter Einfedern der Federzungen (9) gegen die zweite Zahnradhälfte (3) gepresst;
d) danach wird die Kreisringscheibe (8) entlastet, wobei die Federzungen (9) zurückfedern und sich mit ihren Kanten (10) formschlüssig auf dem Außenumfang des Bauteils (B) abstützen.

## Claims

1. Divided toothed wheel (1) having two toothed wheel halves (2, 3) braced against each other, wherein the first toothed wheel half (2) has a hollow cylindrical collar (4), to which the second toothed wheel half (3) is attached by means of a fastening element (6), wherein the fastening element (6) is formed as an elastically deformable circular ring disk (8), **characterised in that** the circular ring disk (8) comprises slots (7) which extend radially outwards starting from a central opening (5) and are disposed distributed over the periphery so that resilient tongues (9) are formed between the slots (7), and wherein the free ends of the resilient tongues (9) have edges (10) which are of a greater hardness than the material of a component (B), which is disposed in the central opening (5), in the holding region of the edges (10) so that, after the circular ring disc (8) has been pushed onto the component (B) and - with the resilient tongues (9) springing inwards - has been pressed against the second toothed wheel half (3), the edges (10) pass into the material of the component (B) and are held in a positive locking manner as the resilient tongues (9) spring back after the circular ring disc (8) has been pressed against the second toothed wheel half (3).

2. Toothed wheel as claimed in claim 1, **characterised in that** the component (B) is a pipe (R) or a shaft (W) to which the toothed wheel is attached.

3. Toothed wheel as claimed in claim 1, **characterised in that** the component (B) is the collar (4) of the first toothed wheel half (2).

4. Toothed wheel as claimed in claim 3, **characterised in that** the collar (4) is attached to the first toothed wheel half (2) or is formed as one piece with the first toothed wheel half (2).

5. Toothed wheel as claimed in any one of the preceding claims, **characterised in that** the edges (10) of the resilient tongues (9) are blade-shaped.

6. Toothed wheel as claimed in any one of the preceding claims, **characterised in that** at least the resilient tongues (9) consist of a hardenable metal and at least the edges (10) are hardened.

7. Toothed wheel as claimed in any one of the preceding claims, **characterised in that** the side surface (3a) of the second toothed wheel half (3) facing the circular ring disk (8) comprises a radially extending recess (11), the border (12) of which surrounds the circular ring disk (8).

8. Toothed wheel as claimed in claim 7, **characterised in that** the depth of the recess (11) in the axial direction is precisely the same size as, or is greater than, the axial extension of the circular ring disk (8).

9. Method for assembling a divided toothed wheel (1) having two toothed wheel halves (2, 3) braced against each other, wherein the first toothed wheel half (2) comprises a hollow cylindrical collar (4) and the second toothed wheel half (3) is pushed onto the collar (4), wherein the second toothed wheel half (3) is attached to the collar (4) by means of a fastening element (6), **characterised by** the following method steps:
a) an elastically deformable circular ring disk (8) is used as the fastening element (6) and comprises slots (7) which extend radially outwards starting from a central opening (5) and are disposed distributed over the periphery, so that resilient tongues (9) are formed between the slots (7), wherein the free ends of the resilient tongues (9) have edges (10) and wherein the edges (10) of the resilient tongues (9) are of a greater hardness than the material of a component (B), which is disposed in the central opening (5), in the holding region of the edges (10);
b) firstly the second toothed wheel half (3) is pushed onto the collar (4) of the first toothed wheel half (2);
c) then the circular ring disk (8) is pushed onto the component (B) and - with the resilient tongues (9) springing inwards - is pressed against the second toothed wheel half (3);
d) subsequently the load is removed from the circular ring disk (8), wherein the resilient tongues (9) spring back and are held by their edges (10) in a positive locking manner against the outer periphery of the component (B).

## Revendications

1. Roue dentée divisée (1) comprenant deux moitiés de roue dentée (2, 3), qui sont serrées l'une contre l'autre, sachant que la première moitié (2) de roue dentée est dotée d'une embase (4) en forme de cylindre creux, sur laquelle la deuxième moitié (3) de roue dentée est fixée au moyen d'un élément de fixation (6), sachant que ledit élément de fixation (6) est réalisé en tant que plaque annulaire (8) déformable élastiquement, **caractérisée en ce que** la plaque annulaire (8) est dotée de fentes (7), qui s'étendent radialement vers l'extérieur à partir d'une ouverture centrale (5) et sont réparties sur le pourtour de sorte que des languettes élastiques (9) se trouvent formées entre les fentes (7), et sachant que les extrémités libres des languettes élastiques (9) sont dotées de bords (10), qui présentent une dureté plus élevée que le matériau d'un composant (B) disposé dans l'ouverture centrale (5), dans la zone d'appui des bords (10), de sorte que, après que la plaque annulaire (8) ait été poussée sur le composant (B) et ait été pressée, par action des languettes élastiques (9), contre la deuxième moitié (3) de roue dentée, les bords (10) pénètrent dans le matériau du composant (B) et prennent appui par emboîtement, les languettes élastiques (9) faisant ressort en arrière, après avoir pressé la plaque annulaire (8) contre la deuxième moitié (3) de roue dentée.

2. Roue dentée selon la revendication 1, **caractérisée en ce que** le composant (B) est un tube (R) ou un arbre (W), sur lequel la roue dentée est fixée.

3. Roue dentée selon la revendication 1, **caractérisée en ce que** le composant (B) est l'embase (4) de la première moitié (2) de roue dentée.

4. Roue dentée selon la revendication 3, **caractérisée en ce que** l'embase (4) est fixée à la première moitié (2) de roue dentée ou formée d'une pièce avec ladite première moitié (2) de roue dentée.

5. Roue dentée selon l'une des revendications précédentes, **caractérisée en ce que** les bords (10) des languettes élastiques (9) sont réalisés en forme de tranchants.

6. Roue dentée selon l'une des revendications précédentes, **caractérisée en ce que** les languettes élastiques (9) au moins consistent en un métal durcissable et que les bords (10) au moins sont durcis.

7. Roue dentée selon l'une des revendications précédentes, **caractérisée en ce que** la face latérale (3a) de la deuxième moitié (3) de roue dentée, tournée vers la plaque annulaire (8), est dotée d'un évidement (11) s'étendant dans la direction radiale, dont le bord (12) entoure la plaque annulaire (8).

8. Roue dentée selon la revendication 7, **caractérisée en ce que** la profondeur de l'évidement (11) est aussi grande,ou plus grande dans la direction axiale que la dimension axiale de la plaque annulaire (8).

9. Procédé d'assemblage d'une roue dentée divisée (1) comprenant deux moitiés de roue dentée (2, 3), qui sont serrées l'une contre l'autre, sachant que la première moitié (2) de roue dentée est dotée d'une embase (4) en forme de cylindre creux et que la deuxième moitié (3) de roue dentée est poussée sur l'embase (4), la deuxième moitié (3) de roue dentée étant fixée sur l'embase (4) au moyen d'un élément de fixation (6), **caractérisé par** les étapes de procédé suivantes :
a) comme élément de fixation (6), est utilisée une plaque annulaire (8), déformable élastiquement, dotée de fentes (7), qui s'étendent radialement vers l'extérieur à partir d'une ouverture centrale (5) et sont réparties sur le pourtour de sorte que des languettes élastiques (9) se trouvent formées entre les fentes (7), sachant que les extrémités libres des languettes élastiques (9) sont dotées de bords (10), et sachant que les bords (10) des languettes élastiques (9) présentent une dureté plus élevée que le matériau d'un composant (B) disposé dans l'ouverture centrale (5) dans la zone d'appui des bords (10) ;
b) la deuxième moitié (3) de roue dentée est tout d'abord poussée sur l'embase (4) de la première moitié (2) de roue dentée ;
c) la plaque annulaire (8) est ensuite poussée sur le composant (B) et pressée, sous l'action des languettes élastiques (9), contre la deuxième moitié (3) de roue dentée ;
d) après cela, la plaque annulaire (8) est délestée, sachant que les languettes élastiques (9) font ressort en arrière et, par emboîtement, prennent appui, avec leurs bords (10), sur la périphérie extérieure du composant (B).
